# EUROPEAN PATENT APPLICATION

(11) **EP 1 474 978 A1**
(43) Date of publication of application: **10.11.2004**
(21) Application number: 03257977.3
(22) Date of filing: 17.12.2003
(51) Int. Cl.: A21B 7/00

(54) **Bread maker**

(30) Priority: 07.05.2003 KR 2003029085
(71) Applicant: SAMSUNG ELECTRONICS CO., LTD., Suwon-City, Kyungki-do (KR)
(72) Inventor: Sung, Han-jun, Suwon city Kyungki-do (KR); Kwon, Yong-hyun, Suwon city Kyungki-do (KR); Kim, Chul, Anyang city Kyungki-do (KR); Lee, Tae-uk, Suwon city Kyungki-do (KR); Park, Jae-ryong, Suwon city Kyungki-do (KR); Lee, Jang-woo, Suwon city Kyungki-do (KR); Lim, Dong-bin, Suwon city Kyungki-do (KR)
(74) Representative: Brandon, Paul Laurence

(57) **Abstract**

A bread maker having a main body (1) divided into an oven compartment (10) and a component compartment (20); and upper and lower kneading drums (11, 13) which rotate, being spaced from each other at upper and lower parts inside of the oven compartment (10) and wind opposite ends of a mixing bag filled with raw materials to make bread and including a driving motor (26) provided inside of the component compartment (20) to rotate one of the upper and lower kneading drums (11, 13); a pair of sprockets (50) rotatably combining with the upper and lower kneading drums (11, 13), respectively; and a chain (27) which rotates the upper and lower kneading drums (11, 13) by engaging with the pair of sprockets (50). Thus, the upper and lower kneading drums (11, 13) linked through the chain (27) are rotatable with a uniform speed, and the raw materials filling in the mixing bag are uniformly kneadable.

## Description

The present invention relates to bread makers, and more particularly, but not exclusively, to a bread maker in which a pair of kneading drums is smoothly rotatable.

Conventionally, various bread makers have been developed to allow a user to easily make a bread by automatically performing multiple operations such as kneading, leavening and baking of raw materials to provide a finished bread to the user.

For example, a bread maker disclosed in Korean Patent Publication No. 1991-10203 includes a pair of parallel kneading drums which are disposed at upper and lower parts of an oven compartment and rotated in clockwise and counterclockwise directions; a baking tray being placed between the pair of parallel kneading drums; and a heater to heat an inside of the oven compartment.

In the bread maker, opposite ends of a mixing bag filled with the raw materials to make a bread, such as flour and baking powder, are wound by the pair of the parallel kneading drums and then the mixing bag reciprocates in upward and downward directions for a predetermined period of time, so that the raw materials to make the bread in the mixing bag are kneaded.

Thereafter, a cutting unit cuts the mixing bag, so that only the kneaded dough moves into the baking tray. Then, the heater heats the inside of the oven compartment, so that the bread is made in the baking tray by leavening and baking the dough for a predetermined period of time.

To get well-kneaded uniform dough from raw the materials filling the mixing bag, the pair of kneading drums should rotate harmoniously with each other, and the pair of kneading drums should reciprocate the mixing bag in the upward and downward directions, repetitively. Thus, a unit to rotate the kneading drums, which not only makes a rotation of the kneading drums smoothly but also has a good durability, so that the raw materials filling the mixing bag is uniformly kneadable is required.

Accordingly, it is an aim of preferred embodiments of the present invention to provide a bread maker in which a pair of kneading drums is smoothly rotatable.

According to the present invention in a first aspect, there is provided bread maker comprising: a main body divided into an oven compartment and a component compartment; and upper and lower kneading drums which rotate, being spaced from each other at upper and lower parts inside of the oven compartment, and wind opposite ends of a mixing bag filled with raw materials to make bread; a driving motor provided inside of the component compartment to rotate one of the upper and lower kneading drums; a pair of sprockets rotatably combined with the upper and lower kneading drums, respectively; and a chain which rotates the upper and lower kneading drums by engaging with the pair of sprockets.

Suitably, a driving shaft part which is rotatably supported on a first sidewall of the component compartment and rotatably combined with the pair of sprockets is provided at one end of each of the upper and lower kneading drums, and a supporting shaft part which is rotatably supported on a second sidewall of the component compartment is provided at the another of each of the upper and lower kneading drums.

According to the present invention in a second aspect, there is provided a bread maker, comprising: a main body including upper and lower kneading drums which remotely rotate therein to make bread; a driving motor provided inside of the main body to rotate the upper and lower kneading drums; a pair of sprockets rotatably combining with the upper and lower kneading drums, respectively; and a chain which rotates the upper and lower kneading drums by engaging with the pair of sprockets and rotates by the driving motor.

Further features of the present invention are set out in the appended claims.

The present invention will become apparent and more readily appreciated from the following description of the embodiment, by way of example only, taken in conjunction with the accompanying drawings of which:
FIG. 1 is a perspective view of a bread maker of an embodiment of the present invention;
FIG. 2 is an enlarged cut-away perspective view of a component compartment of FIG. 1;
FIG. 3 is an exploded perspective view showing a driving shaft part and a drum driving part combined with an upper kneading drum of FIG 2.

Reference will now be made in detail to an embodiment of the present invention, examples of which are illustrated in the accompanying drawings, wherein like reference numerals refer to like elements throughout. The embodiment is described below in order to explain the present invention by referring to the figures.

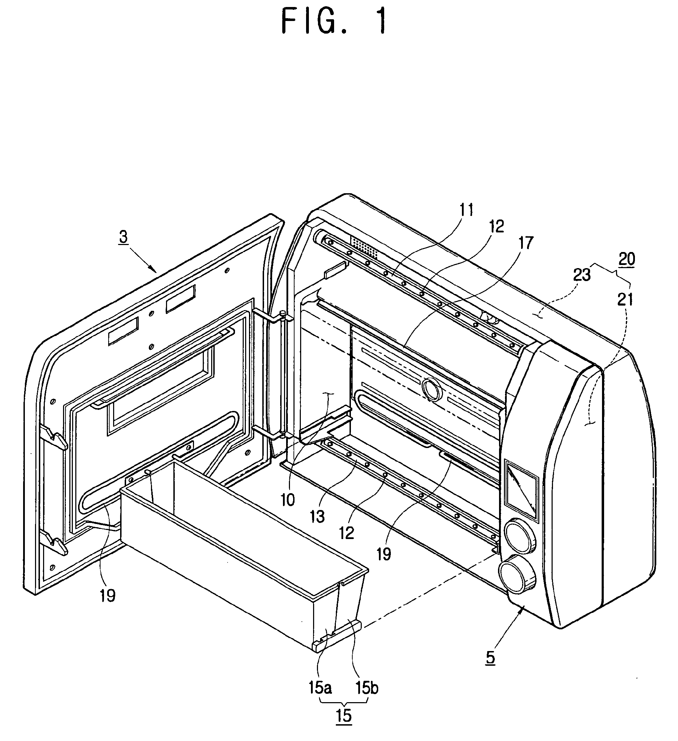

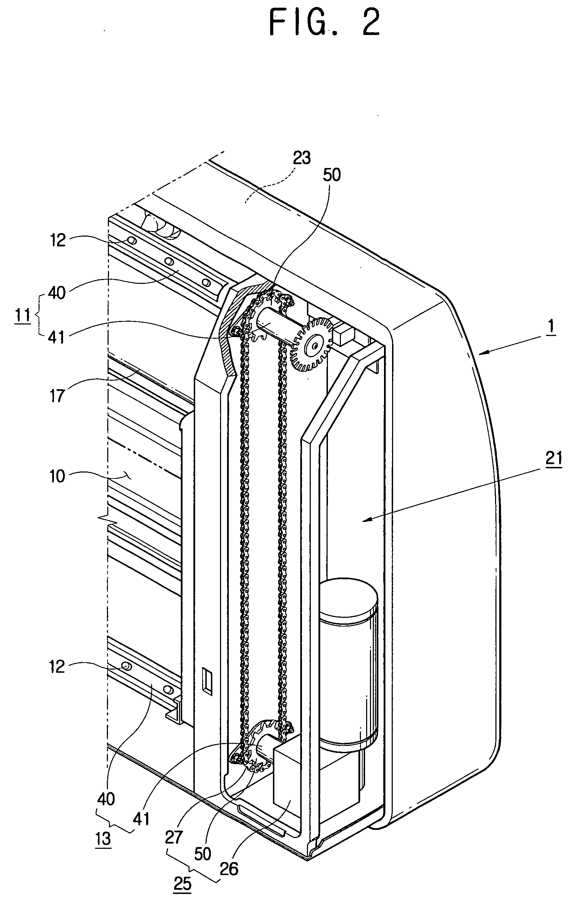

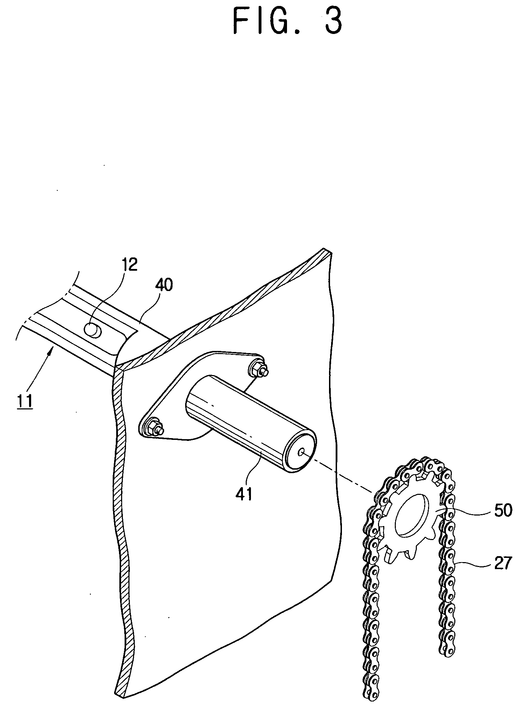

FIG. 1 is a perspective view of a bread maker of an embodiment of the present invention, FIG. 2 is an enlarged cut-away perspective view of a component compartment of FIG. 1, and FIG. 3 is an exploded perspective view illustrating a driving shaft part 41 and a drum driving part 25 combined with an upper kneading drum 11 of FIG 2. As shown in FIGS. 1-3, a bread maker comprises: a main body 1 divided into an oven compartment 10 and a component compartment 20; a door 3 in a front of the main body 1 to open and to close a front opening of the oven compartment 10; and an operation display panel 5 in a front side of the main body 1 to display an operation state of the main body 1.

In upper and lower parts inside of the oven compartment 10 are placed upper and lower kneading drums 11 and 13 which are rotatably disposed in parallel to wind a predetermined length of opposite ends of a mixing bag (not shown) filled with raw materials to make bread in clockwise and counterclockwise directions. In a lower part of the oven compartment 10, a baking tray 15 to contain kneaded materials therein is provided between the upper and lower kneading drums 11 and 13. Between the upper kneading drum 11 and the baking tray 15 is placed a pair of dough-blocking members 17 preventing the raw materials kneaded in the mixing bag from being moved toward the upper kneading drum 11.

The upper and lower kneading drums 11 and 13 have a substantially common shape and comprises: a drum main body 40 which is formed along a longitudinal direction thereof with a plurality of holding projections 12 to insert in holding holes formed at end parts of the mixing bag; the driving shaft part 41 which extends outward from one end of the drum main body 40 and is rotatably supported on a wall of a first component compartment 21 (to be described later); and a supporting shaft part (not shown) which extends outward from another end of the drum main body 40 and is supported on the inner wall of the oven compartment 10 on an opposite side of the wall supporting the driving shaft part 41 so as to rotate in clockwise and counterclockwise directions.

The baking tray 15 forms a box having a top opening by combining first and second trays 15a and 15b of an "L" shaped section symmetrical to each other.

At upper and lower parts of the rear inner wall of the oven compartment 10 and upper and lower parts of the inside wall of the door 3, baking heaters 19 are provided to heat the inside of the oven compartment 10.

The component compartment 20 includes the first component compartment 21 beside the oven compartment 10 and a second component compartment 23 behind the oven compartment 10. Inside the first component compartment 21 is placed the drum driving part 25 rotating the upper and lower kneading drums 11 and 13 in clockwise and counterclockwise directions.

The drum driving part 25 comprises a driving motor 26 rotating the lower kneading drum 13; a pair of sprockets 50 rotatably combined with the upper and lower kneading drums 11 and 13, respectively; and a chain 27 which engages with the pair of sprockets 50 and co-rotates the upper and lower kneading drums 11 and 13.

The chain 27 is of a closed loop shape and rotates by engaging with the pair of sprockets 50 combined with the upper and lower kneading drums 11 and 13, respectively, when the driving motor 26 operates. The sprockets 50 are formed with toothlike projections on a rim to engage with the chain 27.

With this configuration, one end of the mixing bag is wound by the upper kneading drum 11. Then, the other end of the mixing bag passes through the pair of dough-blocking members 17 and a slit formed at a bottom of the baking tray 15 and is wound by the lower kneading drum 13. A sealed pack filled with the raw materials to make the bread reciprocates in the upward and downward directions between the upper and lower kneading drums 11 and 13 during a kneading process, so that the raw materials to make the bread contained in the mixing bag are kneaded between the pair of dough-blocking members 17 and the baking tray 15. After completing this kneading process, the raw materials to make the bread, separated from the mixing bag, are contained in the baking tray 15, thereby being baked in the baking heater 19.

In the bread maker, the upper and lower kneading drums 11 and 13 are linked through the chain 27 so that the upper and lower kneading drums 11 and 13 are rotatable to knead the mixing bag, and the chain 27 engages with respective sprockets 50 combined with each of the driving shaft parts 41 of the upper and lower kneading drums 11 and 13 without jumping any engaging sequence. Thus, the upper and lower kneading drums 11 and 13 may be rotated more smoothly.

Further, the upper and lower kneading drums 11 and 13 are linked through the chain 27 and the chain 27 does not easily loosen through a repetitive usage for a long period of time, so that a durability of the drum driving part 25 may be facilitated.

As is described above, the chain is rotatable by positively engaging with the sprockets. Thus, the upper and lower kneading drums linked through the chain are rotatable with a uniform speed, so that the raw materials filling in the mixing bag are uniformly kneadable. Further, the chain is used to rotate the upper and lower kneading drums, so that their durability is prolongable.

Although an embodiment of the present invention has been shown and described, it will be appreciated by those skilled in the art that changes may be made in the embodiment without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A bread maker including a main body (1) divided into an oven compartment (10) and a component compartment (20); and upper and lower kneading drums (11, 13) which rotate, being spaced from each other at upper and lower parts inside of the oven compartment (10) and wind opposite ends of a mixing bag filled with raw materials to make bread, the bread maker comprising:
a driving motor (26) provided inside of the component compartment (20) to rotate one of the upper and lower kneading drums (11, 13);
a pair of sprockets (50) rotatably combining with the upper and lower kneading drums (11, 13), respectively; and
a chain (27) which rotates the upper and lower kneading drums (11, 13) by engaging with the pair of sprockets (50).

2. The bread maker according to claim 1, further comprising:
a pair of driving shaft parts (41) which are each rotatably supported on a first sidewall of the component compartment (20) and rotatably combined with a respective one of the pair of sprockets (50) at one end of each of the upper and lower kneading drums (11, 13), and a pair of supporting shaft parts which are each rotatably supported on a second sidewall of the component compartment (20) at another end of the upper and lower kneading drums (11, 13).

3. A bread maker, comprising:
a main body (1) including upper and lower kneading drums (11, 13) which remotely rotate therein to make bread;
a driving motor (26) provided inside of the main body (1) to rotate the upper and lower kneading drums (11, 13);
a pair of sprockets (50) rotatably combining with the upper and lower kneading drums (11, 13), respectively; and
a chain (27) which rotates the upper and lower kneading drums (11, 13) by engaging with the pair of sprockets (50) and rotates by the driving motor (26).

4. The bread maker according to claim 3, wherein the upper and lower kneading drums (11, 13), each comprise:
a driving shaft (14) part provided at a corresponding end of a respective one of the upper and lower kneading drums (11, 13), and a supporting shaft part provided at another corresponding end of the respective one of the upper and lower kneading drums (11, 13).

5. The bread maker according to claim 4, wherein:
the main body (1) comprises:
oven (10) and component compartments (20); and
each of the driving shaft parts (41) is rotatably supported on a first sidewall of the component compartment (20) and rotatably combined with the pair of sprockets (50), and each of the supporting shaft parts is rotatably supported on a second sidewall of the component compartment (20).

6. The bread maker according to claim 5, further comprising:
heaters (19); and
a door (3) to selectively open and close an opening of the oven compartment (10) of the main body (1), wherein the oven compartment (10) of the main body (1) comprises:
a rear inner wall such that, at upper and lower parts of the rear inner wall and at upper and lower parts of an inside wall of the door (3), the heaters (19) are provided to heat an inside of the oven compartment (10).

7. The bread maker according to any one of claims 3-6, wherein the upper and lower kneading drums (11, 13) are rotatably disposed in parallel with each other.

8. The bread maker according to any one of claims 3-7, further comprising:
a mixing bag to mix dough therein and attached to the upper and lower kneading drums (11, 13); and
a pair of dough-blocking members (17) to prevent the dough placed in the mixing bag from being moved toward the upper kneading drum (11).

9. The bread maker according to any one of claims 3-8, wherein the upper and lower kneading drums (11, 13) have a substantially common shape.

10. The bread maker according to claim 9, wherein each of upper and lower kneading drums (11, 13) comprises:
a drum main body (40) formed along a longitudinal direction thereof with a plurality of holding projections (12) to insert in holding holes formed at end parts of the mixing bag;
driving shaft parts (41) extending outward from one end of the drum main body (40) to drive the upper and lower kneading drums (11, 13), respectively; and
supporting shaft parts extending outward from another end of the drum main body (40) so as to rotatably support the upper and lower kneading drums (11, 13).

11. The bread maker according to any one of claims 3-10, wherein the chain (27) is of a closed loop shape and rotates by engaging with the pair of sprockets, wherein each of the sprockets (50) comprises:
a rim; and
toothlike projections on the rim to engage the chain.

12. The bread maker according to any one of claims 3-11, wherein the pair of sprockets (50) are linked by the chain (27) to rotate the upper and low kneading drums (11, 13) at a uniform speed.
